# EUROPÄISCHE PATENTSCHRIFT

(11) **EP 0 406 459 B1**
(45) Veröffentlichungstag und Bekanntmachung des Hinweises auf die Patenterteilung: **31.03.1993**
(21) Anmeldenummer: 89112140.2
(22) Anmeldetag: 03.07.1989
(51) Int. Cl.: B23K 9/20

(54) **Bolzenschweisspistole**
Stud-welding gun
Pistolet de soudage de goujons

(43) Veröffentlichungstag der Anmeldung: 09.01.1991
(73) Patentinhaber: Bolzenschweisstechnik Heinz Soyer GmbH, D-82237 Wörthsee (DE)
(72) Erfinder: Dibiasi, Lino, D-8034 Germering (DE)
(74) Vertreter: von Kirschbaum, Albrecht, Dipl.-Ing.

(56) Entgegenhaltungen:
- DE-A- 3 105 987
- US-A- 3 694 611

## Beschreibung

Die Erfindung betrifft eine Bolzenschweißpistole nach dem Oberbegriff des Anspruchs 1.

Aus der DE-PS 31 05 987 ist beispielsweise eine Bolzenschweißpistole bekannt, bei welcher Bolzen von der Seite her durch ein Einführrohr in einen Aufnahmeteil einzuführen und mittels einer an einem Schubkolben angebrachten Schubstange in einen am vorderen Ende der Pistole angeordneten Bolzenhalter hineinzuschieben sind. Zum Umrüsten auf Bolzen mit anderen Abmessungen, d.h. mit anderer Länge und/oder mit einem anderen Durchmesser, ist in dem Pistolenkolben ein mit einer seitlichen Öffnung versehenes Einschubrohr lösbar eingesetzt, dessen Innendurchmesser dem Außendurchmesser des jeweils zu verarbeitenden Bolzens entspricht. Ferner ist bei dieser Bolzenschweißpistole an dem dem Bolzenhalter abgewandten Ende des im Pistolenkolben angeordneten Einschubrohres eine den Hub der Schubstange begrenzende Distanzbuchse austauschbar angeordnet, deren Länge der jeweiligen Länge des zu verarbeitenden Bolzens entspricht.

Um das Einschubrohr aus dem Pistolenkolben herausziehen zu können, ist in dessen vorderen, dem Bolzenhalter zugewandten Ende wenigstens eine Ausnehmung vorgesehen, mit welcher ein dem Herausziehen des Einschubrohrs dienendes Werkzeug in Eingriff gebracht werden kann.

Bei dieser bekannten Bolzenschweißpistole müssen somit bei einer Umrüstung neben dem Bolzenhalter auf jedem Fall auch noch das Einschubrohr oder die Distanzbuchse oder aber auch beide Bauteile gegen entsprechende Bauteile mit anderen Abmessungen ausgetauscht werden; das heißt aber, die Umrüstung dieser bekannten Bolzenschweißpistole ist besonders dann, wenn neben dem Bolzenhalter auch das Einschubrohr und die Distanzbuchse auszuwechseln sind, verhältnismäßig umständlich und zeitaufwendig. Obendrein ist die bekannte Bolzenschweißpistole in ihrer Länge durch das an ihrem vorderen Ende vorgesehene Einschubrohr nicht unbeträchtlich vergrößert, wodurch wiederum ihr Einsatz bei begrenzten Raumverhältnissen in beachtlichem Umfang erschwert, wenn nicht sogar, ausgeschlossen wird.

Aufgabe der Erfindung ist es daher, eine Bolzenschweißpistole nach dem Oberbegriff des Anspruchs 1 zu schaffen, welche bei einer geringen Baulänge bequem und schnell auf Bolzen unterschiedlicher Abmessungen, d.h. unterschiedlicher Längen und/oder Durchmesser, umzurüsten ist.

Gemäß der Erfindung ist diese Aufgabe durch die Merkmale des Anspruchs 1 gelöst.

Zur Abdichtung gegenüber der Schubstange ist gemäß einer vorteilhaften Ausbildung der Erfindung in einer in der Seitenwandung der Mittenbohrung ausgebildeten Nut der Kunststoffscheibe vorzugsweise ein O-Ring aus Gummi oder einem ähnlichen elastischen Material vorgesehen.

Die in den Bolzenhalterflansch einzusetzende Kunststoffscheibe kann auf ihrer dem Schubkolben zugewandten Seite einen Ansatz mit entsprechender Mittenbohrung aufweisen; hierbei ist der Durchmesser des Ansatzes kleiner als der Durchmesser des Schubkolbens und seine Dicke ist der Länge der jeweils zu verschweißenden Bolzen angepaßt.

Gemäß einer besonders bevorzugten Ausführungsform der Erfindung ist jedoch zur Anpassung der Länge der Kolbenstange an die Länge der zu verschweißenden Bolzen zwischen der in den Bolzenhalterflansch eingesetzten Kunststoffscheibe und der der Kunststoffscheibe zugewandten Fläche des Schubkolbens eine bezüglich ihrer Dicke entsprechend bemessene Distanzscheibe mit einer dem Kolbenstangendurchmesser entsprechenden Mittenbohrung auf dieser Kolbenstange vorgesehen.

Besonders vorteilhaft ist bei der Erfindung, daß oft nur ein erfindungsgemäß ausgebildeter Bolzenhalter gegen den gerade benutzten Bolzenhalter ausgetauscht zu werden braucht, wenn die nunmehr zu verschweißenden Bolzen die gleiche Länge, jedoch einen anderen Durchmesser als die bisher verschweißten Bolzen haben. In diesem Fall braucht nach Lösen einer Überwurfmutter der bisher benutzte nur gegen den nunmehr zu verwendenden Bolzenhalter ausgetauscht zu werden, welcher dann wieder mit derselben Überwurfmutter an der Pistole zu befestigen ist. Dieses Auswechseln von Bolzenhaltern ist derart einfach, daß es jederzeit auch von ungeschultem Personal oder auch von Personen ohne ein besonderes manuelles Geschick sehr schnell und leicht durchgeführt werden kann.

Wenn dagegen statt der bisher verschweißten Bolzen nunmehr Bolzen mit dem gleichen Durchmesser, aber mit einer anderen Länge verschweißt werden sollen, wird nach Lösen der Überwurfmutter und dem Abnehmen des Bolzenhalters entweder die in dem Bolzenhalter aufgenommene Kunststoffscheibe gegen eine andere Kunststoffscheibe mit einem in der Dicke entsprechend bemessenen Ansatz ausgewechselt, oder aber nach einem Abziehen des Bolzenhalters von der Schubstange wird auf diese eine in ihrer Dicke entsprechend bemessene Distanzscheibe aufgesteckt. Anschließend wird dann in beiden Fällen wieder der Bolzenhalter mittels der Übermutter an der Pistole befestigt.

Wenn Bolzen verschweißt werden sollen, welche sich sowohl hinsichtlich ihrer Länge als auch ihres Durchmessers von den bisher verschweißten Bolzen unterscheiden, müssen die Bolzenhalter ausgetauscht und die Länge der Schubstange auf eine der beiden vorstehend beschriebenen Arten der Länge der nunmehr zu verschweißenden Bolzen angepaßt werden.

Wenn somit nacheinander Bolzen verschiedener Länge und/oder unterschiedlicher Durchmesser verschweißt werden sollen, ist jeweils von Fall zu Fall zu entscheiden, ob es zweckmäßiger ist, die in den Bolzenhalterflansch aufgenommene Kunstscheibe mit Ansatz gegen eine mit einem anders dimensionierten Ansatz auszuwechseln, oder aber zwischen der bisher verwendeten Kunststoffscheibe und dem Schubkolben eine in ihrer Dicke entsprechend bemessene Distanzscheibe auf die Kolbenstange aufzubringen.

Welche der beiden bei der Erfindung möglichen, vorteilhaften Umrüstvorgänge ein Benutzer wählt, ist ganz in sein Belieben gestellt bzw. kann gegebenenfalls auch von der Art und der Häufigkeit der jeweiligen Umrüstvorgänge abhängen. Vorzugsweise besteht die Distanzscheibe aus demselben Material wie die in dem Bolzenhalterflansch aufgenommene Kunststoffscheibe.

Hinsichtlich der Lagerhaltung ergibt sich der weitere Vorteil, daß diese ganz wesentlich vereinfacht ist, da lediglich die - ohnehin nur eine bestimmte Standzeit aufweisenden - Bolzenhalter sowie Distanzscheiben bzw. Kunststoffscheiben unterschiedlicher Dicke vorrätig sein müssen. Es ist also nicht mehr erforderlich, daß zusätzlich noch die wesentlich größeren Pistolenkolben oder Einschubrohre zum Austausch zur Verfügung stehen, deren Innenabmessungen jeweils den zu verschweißenden Bolzen angepaßt sind.

Gemäß der Erfindung sind somit einerseits nur sehr einfach herzustellende und entsprechend preiswerte Bauteile in Form von Distanzscheiben bzw. von Kunststoffscheiben mit unterschiedlich dicken Ansätzen andererseits Bolzenhalter bereitszustellen sowie auszutauschen, welch letztere bei längerem Einsatz einer verhältnismäßig starken Abnutzung unterworfen sind und wegen des damit verbundenen Verschleißes ohnehin ausgewechselt werden müssen.

Ferner sind wegen des Entfallens von Einschubrohren, die beispielsweise bei der aus der eingangs angeführten DE-PS 31 05 987 bekannten Schweißpistolen verwendet sind und ausgetauscht werden müssen, die Längsabmessungen von gemäß der Erfindung ausgeführten Bolzenschweißpistolen um mindestens 40 mm kürzer. Ferner kann mit der erfindungsgemäßen Bolzenschweißpistole beispielsweise auch näher am Rande von abgekantetem Blech gearbeitet werden.

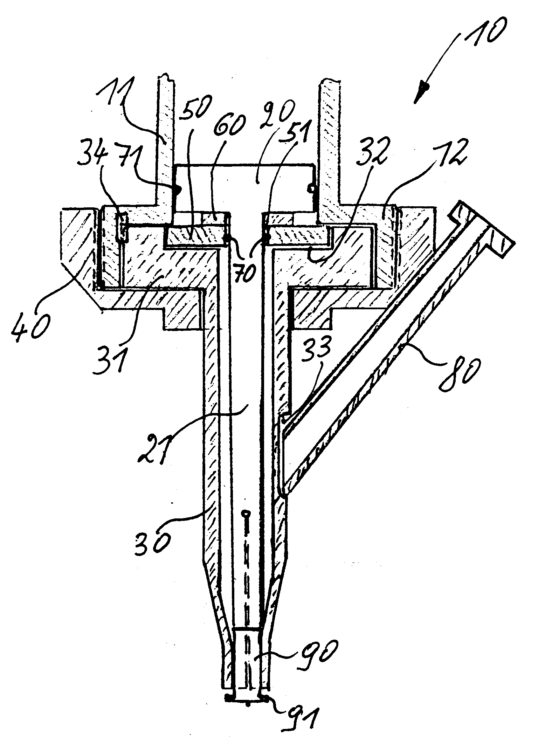

Nachfolgend wird die Erfindung anhand einer Zeichnung beschrieben, in welcher in einer einzigen Figur schematisch im Längsschnitt der vordere Teil einer Bolzenschweißpistole wiedergegeben ist.

Bei dem in der Zeichnung rein schematisch dargestellten, vorderen Ende einer Bolzenschweißpistole 10 ist in deren Zylinder 11 ein Schubkolben 20 mit einer daran befestigten Koblenstange 21 vorgesehen, die in einem speziell ausgeführten Bolzenhalter 30 aufgenommen ist, welcher mittels einer Überwurfwurfmutter 40 an dem erweiterten, zylindrischen Ansatz 12 der Pistole 10 befestigt ist.

In der vorliegenden Beschreibung ist darauf verzichtet, den an sich bekannten Aufbau und die ebenfalls bekannte Arbeitsweise einer herkömmlichen Bolzenschweißpistole im einzelnen zu erläutern. Nachstehend werden daher auch nur diejenigen Merkmale näher erläutert, welche zum Verständnis der Erfindung erforderlich sind.

Der gegenüber herkömmlichen Bolzenhaltern länger ausgeführte Bolzenhalter 30 weist im Unterschied zu den bisher bereits verwendeten Bolzenhaltern an seinem pistolenseitigen Ende einen Flansch 31 auf dessen Durchmesser erheblich größer ist, als derjenige des Pistolenzylinders 11 und etwa dem Innendurchmesser des Pistolenansatzes 12 entspricht. In der pistolenseitigen Endfläche des Bolzenhalterflansches 31 ist eine konzentrische, kreiszylindrische Ausnehmung 32 ausgebildet, in welcher eine Kunststoffscheibe 50 aufgenommen ist, deren Durchmesser etwas größer als der Durchmesser des Schubkolbens 20 ist. In der Dicke ist die Kunststoffscheibe 50 so bemessen, daß sie etwas über die in dem Flansch 31 ausgebildete Ausnehmung 32 vorsteht. Die Kunststoffscheibe 50 kann daher als Anschlag für den Schubkolben 20 dienen.

In der Kunststoffscheibe 50 ist eine konzentrische Mittenbohrung 51 ausgebildet, deren Abmessung dem Durchmesser der Kolbenstange 20 angepaßt ist. Zur Abdichtung der Kolbenstange ist in der Seitenwandung der Mittenbohrung 51 in einer nicht näher bezeichneten Nut ein O-Ring 70 eingesetzt. Die Kunststoffscheibe 50 dient somit einerseits als Führung für die Kolbenstange 21 und gleichzeitig als Anschlag, wie vorstehend bereits ausgeführt, da ihr Außendurchmesser größer als der Außendurchmesser des in dem Pistolenzylinder 11 in axialer Richtung geführten Schobkolbens 20 ist.

In dem Ansatz 12 des Pistolenzylinders 11 ist ein Stift 34 vorgesehen, welcher der Zentrierung des Bolzenhalters 30 bzw. dessen Flansch 31 bezüglich des hohlzylindrischen Ansatzes 12 dient.

In der dargestellten Ausführungsform ist zwischen dem Schubkolben 20 und der Kunststoffscheibe 50 eine vorzugsweise ebenfalls aus Kunststoff bestehende Distanzscheibe 60 vorgesehen und somit nur eine der eingangs angeführten beiden Möglichkeiten, um die Länge der Kolbenstange 21 der Länge der jeweils zu verschweißenden Bolzen anzupassen, im einzelnen dargestellt.

In einer Seitenwandung des Bolzenhalters 30 ist eine Einführöffnung 33 ausgebildet, in welcher ein schematisch dargestelltes Bolzeneinführrohr 80 endet. Die Innenabmessungen der auswechselbaren Einführrohre sind jeweils dem Durchmesser der zu verschweißenden Bolzen bzw. deren Flanschdurchmesser angepaßt. Das Einführrohr 80 ist in nicht näher dargestellter Weise in einer am Pistolengehäuse ausgebildeten Führung so gehaltert, daß es schnell, leicht und bequem jederzeit gegen ein anderes Einführrohr 80 ausgetauscht werden kann.

In der Zeichnung ist der Schubkolben 20 mit der Kolbenstange 21 in der vorgeschobenen Stellung dargestellt, in welcher deren unteres Ende an einem Bolzen 90 so anliegt, daß dessen Flansch 91 den erforderlichen Abstand von dem Bolzenhalter 30 aufweist.

Während sich die Kolbenstange 21 und damit der Schubkolben 20 in einer zurückgezogenen, nicht dargestellten Stellung befunden hat, ist der Bolzen 90 durch das Einführrohr und über die Einführöffnung 33 in dem Bolzenhalter 30 in den Bereich vor das Ende der zurückgezogenen Kolbenstange 21 eingebracht worden. Beim Vorwärtshub des Schubkolbens 20 und der Kolbenstange 31 ist der Bolzen 90 durch den geschlitzten und gegen seine Federkraft aufgeweiteten Bolzenhalter 30 in die in der Zeichnung wiedergegebene Lage gebracht worden.

Damit ein Bolzen 90 aus dem Bereich der seitlichen Einführöffnung 33 durch die Kolbenstange 21 in die in der Zeichnung wiedergegebene Position gebracht werden kann, müssen die Innenabmessungen des rohrförmigen Raumes in diesem Bereich des Bolzenhalters 30 einerseits dem Außendurchmesser der zu verschweißenden Bolzen 90 bzw. deren Flansche 91 und andererseits auch der Bolzenlänge angepaßt sein. Der Innenraum des Bolzenhalters 30 ist daher im Bereich der Einführöffnung so zu bemessen, daß durch seine Dimensionierung sichergestellt ist, daß Bolzen ordnungsgemäß geführt in den vorderen geschlitzten und aufweitbaren Bereich des Bolzenhalters geschoben werden können.

Bei der Erfindung ist hinsichtlich der richtigen Längenbemessung der Kolbenstange 21 die richtige Dickendimensionierung der in den Bolzenhalterflansch 31 eingesetzten Kunststoffscheibe und u.U. des an dieser Scheibe ausgebildeten Ansatzes bzw. einer auf die Kolbenstange 21 aufgeschobenen Distanzscheibe 60 von ausschlaggebender Bedeutung ist. Das wiederum bedeutet, daß die für einen einwandfreien Schweißvorgang erforderlich Position des Bolzens 90 im Bolzenhalter 30 nur dann erreicht werden kann, wenn die Kolbenstange 21 durch die vorstehend beschriebene Maßnahme (entsprechend dimensionierte Kunststoffscheibe 50 oder Distanzscheibe 60) in ihrer Länge der Länge der jeweils verwendeten Bolzen ganz genau angepaßt ist.

Wenn ein Bolzen 90 mit anderem Durchmesser, jedoch gleicher Länge verschweißt werden sollen, brauchen somit gemäß der Erfindung nur die Überwurfmutter 40 gelöst und zusammen mit dem Bolzenhalter 30 von der Pistole 10 abgenommen zu werden. Nachdem der bisher verwendete gegen einen entsprechend dimensionierten, anderen Bolzenhalter 30 ausgetauscht ist und die bisher verwendete Kunststoffscheibe 50 in den neuen, nunmehr zu verwendenden Bolzenhalter 30 eingesetzt worden ist, wird der vorbereitete, neue Bolzenhalter 30 mittels der Überwurfmutter 40 wieder an dem Pistolengehäuse befestigt.

Bei einer Längenänderung der zu verarbeitenden Bolzen braucht entweder in dem abgenommenen Bolzenhalter 30 lediglich die dort vorgesehene Kunststoffscheibe 50 gegen eine mit einem anders dimensionierten Ansatz ausgetauscht zu werden, oder aber es muß auf die Kolbenstange 21 eine entsprechend dimensionierte Distanzscheibe 60 aufgebracht bzw. eine verwendete Distanzscheibe entfernt werden, was davon abhängt, ob anschließend längere oder kürzere Bolzen geschweißt werden sollen. Welche der beiden Möglichkeiten gewählt wird, ist im Prinzip dem Belieben des Benutzers überlassen.

Durch den Zentrierstift 34 im Hohlzylinderansatz 12 der Pistole 10 ist gewährleistet, daß beim Einsetzen ein Bolzenhalter 30 immer so an der Pistole 10 befestigt ist, daß die in ihm vorgesehene Einführöffnung 33 immer so positioniert ist, daß in ihr die Mündung eines schnell und leicht einzusetzenden Einführrohrs 80 liegt.

## Patentansprüche

1. Bolzenschweißpistole (10), bei welcher Bolzen (90) seitlich über ein Einführrohr (80) einzubringen und mittels einer an einem Schubkolben befestigten Kolbenstange (21) in einen an der Schweißpistole gehalterten Bolzenhalter (30) hineinzuschieben sind, und durch Austauschen von Teilen der Schweißpistole Bolzen mit unterschiedlichen Abmessungen verschweißbar sind, wobei der Durchmesser einer zentrischen Bohrung am vorderen Ende des Bolzenhalters (30) dem Durchmesser der jeweils zu verschweißenden Bolzen (90) oder deren Flanschdurchmesser entspricht, und das pistolenseitige Ende des Bolzenhalters (30) in Form eines Flansches (31) ausgebildet ist, und wobei der Bolzenhalter (30) über den an ihm ausgebildeten Flansch (31) mittels einer Überwurfmutter (40) unmittelbar an der Pistole (10) befestigt ist, dadurch **gekennzeichnet,** daß das Einführrohr (80) in einer etwa im mittleren Bereich des längeren Bolzenhalters (30) ausgebildeten, seitlichen Einführöffnung (33) endet, und daß in der der Pistole (10) zugewandten Endfläche des Flansches (31) eine konzentrische Ausnehmung (32) vorgesehen ist, deren Durchmesser größer als der Durchmesser des Schubkolbens (20) ist, und in welcher als Anschlag und zur Führung der Kolbenstange (21) eine entsprechend bemessene Kunststoffscheibe (50) mit einer dem Durchmesser der Kolbenstange (21) entsprechenden Mittenbohrung aufgenommen ist.

2. Bolzenschweißpistole nach Anspruch 1, dadurch **gekennzeichnet**, daß die in den Bolzenhalterflansch (31) einzusetzende Kunststoffscheibe (50) auf ihrer dem Schubkolben (20) zugewandten Seite einen Ansatz mit entsprechender Mittenbohrung aufweist, dessen Durchmesser kleiner als der Durchmesser des Schubkolbens (20) ist, und dessen Dicke der Länge der jeweils zu verschweißenden Bolzen (90) angepaßt ist.

3. Bolzenschweißpistole nach Anspruch 1, dadurch **gekennzeichnet**, daß zur Anpassung der Länge der Kolbenstange (21) an die Länge von zu verschweißenden Bolzen (90) zwischen der Kunststoffscheibe (50) und der dieser zugewandten Fläche des Schubkolbens (20) eine bezüglich ihrer Dicke entsprechend bemessene Distanzscheibe (60) mit Mittenbohrung auf der Kolbenstange vorgesehen ist.

4. Bolzenschweißpistole nach einem der Ansprüche 1 oder 2, dadurch **gekennzeichnet**, daß in einer Nut in der Mittenbohrung der in den Bolzenhalterflansch (31) eingesetzten Kunststoffscheibe (50) zur Abdichtung der Kolbenstange (21) ein O-Ring (71) vorgesehen ist.

## Claims

1. Stud welding gun (10) in which studs (90) are introduced laterally via an introduction tube (80) and pushed into a stud holder (30) mounted on the welding gun by means of a piston rod (21) secured to a thrust piston, and by exchanging components of the welding gun studs of different dimensions can be welded, the diameter of a central bore at the front end of the stud holder (30) corresponds to the diameter of the particular studs (90) to be welded or their flange diameter, the gun-side end of the stud holder (30) is configured in the form of a flange (31), and via the flange (31) formed thereon the stud holder (30) is secured by means of a cap nut (40) directly to the gun (10), characterized in that the introduction tube (80) terminates in a lateral introduction opening (33) formed substantially in the centre region of the longer stud holder (30) and that in the end face of the flange (31) facing the gun (10) a concentric recess (32) is provided which has a diameter greater than the diameter of the thrust piston (20) and in which as stop and for guiding the piston rod (21) a correspondingly dimensioned plastic disc (50) having a centre bore corresponding to the diameter of the piston rod (21) is received.

2. Stud welding gun according to claim 1, characterized in that the plastic disc (50) to be inserted into the stud holder flange (31) comprises on its side facing the thrust piston (20) an extension with corresponding centre bore and having a diameter which is smaller than the diameter of the thrust piston (20) and a thickness adapted to the length of the particular studs (90) to be welded.

3. Stud welding gun according to claim 1, characterized in that for adaptation of the length of the piston rod (21) to the length of the studs (90) to be welded a spacer disc (60) dimensioned correspondingly in its thickness and having a centre bore is provided on the piston between the plastic disc (50) and the face of the thrust piston (20) facing said disc.

4. Stud welding gun according to claim 1 or 2, characterized in that for sealing the piston rod (21) an O-ring (71) is provided in a groove in the centre bore of the plastic disc (50) inserted into the stud holder flange (31).

## Revendications

1. Pistolet de soudage de goujons (10) dans lequel des goujons (90) sont avancés latéralement par l'intermédiaire d'un tube d'introduction (80) et sont introduits dans un porte-goujon (30) monté sur le pistolet de soudage au moyen d'une tige de piston (21) fixée à un piston de poussée, des goujons de dimensions différentes pouvant être soudés après remplacement d'éléments du pistolet, le diamètre d'un alésage central à l'extrémité avant du porte-goujon (30) correspondant à celui des goujons à souder (90) ou de leur bride, l'extrémité du porte-goujon (30) située du côté du pistolet ayant la forme d'une bride (31), et le porte-goujon (30) étant fixé directement au pistolet (10) par la bride (31) qu'il comprend et au moyen d'un écrou d'accouplement (40), caractérisé en ce que le tube d'introduction (80) se termine par une ouverture d'introduction latérale (33) constituée sensiblement dans la région centrale du porte-goujon allongé (30), et en ce que la surface d'extrémité de la bride (31) qui est tournée vers le pistolet (10) est munie d'un évidement concentrique (32) dont le diamètre est supérieur au diamètre du piston de poussée (20), et dans lequel est reçue en tant que butée pour le guidage de la tige de piston (21) une rondelle en matière plastique (50) de dimensions appropriées et dont l'alésage central correspond au diamètre de la tige de piston (21).

2. Pistolet de soudage de goujons selon la revendication 1, caractérisé en ce que la rondelle en matière plastique (50) qui doit être disposée dans la bride (31) du porte-goujon comprend sur con côté qui est tourné vers le piston de poussée (20) un élément rapporté avec un alésage central approprié, dont le diamètre est plus petit que le diamètre du piston de poussée (20) et dont l'épaisseur est adaptée à la longueur du goujon (90) à souder.

3. Pistolet de soudage de goujons selon la revendication 1, caractérisé en ce que pour adapter la longueur de la tige de piston (21) à la longueur du goujon (90) à souder, il est prévu entre la rondelle en matière plastique (50) et la surface du piston de poussée (20) qui est tournée vers elle une rondelle d'écartement (60) dimensionnée de façon appropriée en ce qui concerne son épaisseur et comprenant un alésage central.

4. Pistolet de soudage de goujons selon la revendication 1 ou 2, caractérisé en ce qu'il est prévu dans une gorge de l'alésage central de la rondelle en matière plastique (50) disposée dans la bride (31) du porte-goujon un joint torique (71) pour rendre étanche la tige de piston (21).
